(19) Europäisches Patentamt
European Patent Office
Office européen des brevets

(11) **EP 2 829 250 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(51) Int Cl.:
***A61C 8/00*** *(2006.01)*

(21) Anmeldenummer: **13178279.9**

(22) Anmeldetag: **26.07.2013**

(54) **Dentalimplantat, Abutment, Implantatsystem und Implantationsset**

Dental implant, abutment, implant system and implantation set

Implant dentaire, butée, système d'implant et jeu d'implantation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.01.2015 Patentblatt 2015/05**

(73) Patentinhaber: **SIC Invent AG**
**4055 Basel (CH)**

(72) Erfinder:
• **Von Malottki, Marcus, Dipl.-Wirt.-Ing.**
**40699 Erkrath (DE)**
• **Schilli, Wilfried, Prof. Dr.**
**79100 Freiburg (DE)**

(74) Vertreter: **Kugler, Jörg**
**Tergau & Walkenhorst**
**Patentanwälte PartGmbB**
**Lurgiallee 12**
**60439 Frankfurt am Main (DE)**

(56) Entgegenhaltungen:
| | |
|---|---|
| EP-A1- 2 570 097 | WO-A1-2012/123654 |
| CN-A- 101 732 097 | CN-Y- 201 160 908 |
| US-A1- 2009 111 072 | US-A1- 2010 248 181 |
| US-A1- 2012 077 151 | US-A1- 2012 270 180 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Dentalimplantat zum Einsetzen in einen Kieferknochen, mit einer am koronalen Ende des Implantats angeordneten Aufnahmeöffnung für ein Abutment, wobei die Aufnahmeöffnung vom koronalen Ende her gesehen einen Konusabschnitt und einen Indexierungsabschnitt aufweist, wobei der Indexierungsabschnitt wenigstens eine entlang eines Kreisumfanges angeordnete, sich nach außen erstreckende Nut aufweist. Sie betrifft weiterhin ein Abutment, ein Implantatsystem und ein Implementationsset.

Die Versorgung eines Patienten mit künstlichem Zahnersatz, der anstelle des oder der vormals vorhandenen natürlichen Zähne tritt, hat gewöhnlich sowohl ästhetische als auch medizinische Hintergründe. Einerseits kann optisch der Eindruck eines vollständigen Gebisses hergestellt werden. Andererseits kann das Fehlen von Zähnen auch zu körperlichen Veränderungen wie Knochenabbau im Bereich des Kiefers, Verschiebungen bzw. "Wandern" der noch vorhandenen Zähne in Richtung der entstandenen Lücke, oder Extrudierungen der gegenüberliegenden Zähne führen.

Wird als künstlicher Zahnersatz ein Dentalimplantat verwendet, wird dieses in der entstandenen Lücke in den Kieferknochen eingesetzt, insbesondere eingeschraubt, wo es möglichst fest mit dem Knochen verwächst. Von dem Implantat wird ein Abutment aufgenommen, welches dann den sichtbaren Zahnersatz, wie beispielsweise eine Krone, trägt.

Die Schnittstelle zwischen Abutment und Implantat ist gewöhnlich in einem ersten Teil bzw. Teilabschnitt konisch ausgeführt. Ein sich daran anschließender rotationsgesicherter Bereich, beispielsweise ein Innensechskant des Implantats, der einen Außensechskant des Abutments zur Bildung einer formschlüssigen Verbindung aufnimmt, verhindert, dass sich das Abutment im Laufe der Zeit durch die im Mund auftretenden Kräfte (insbesondere aufgrund von Kaubewegungen) gegenüber dem Implantat verdreht. Eine Indizierung bzw. Indexierung erleichtert zudem eine präzise Übertragung der Implantatorientierung auf ein Meistermodell und somit auch die genaue Modellierung und Einpassung des Zahnersatzes.

Aus der WO 2011/089057 A1 ist ein Dentalimplantat bekannt, welches einen konischen Teil und einen sich daran anschließenden Indexierungsteil aufweist. Der Gesamtkonuswinkel beträgt dabei 6° bis 20°.

Nachteilig bei einem Gesamtkonuswinkel in diesem Größenbereich ist, dass zum einen nur ein relativ geringer Spannweg bei der Absenkung des Abutments in das Implantat bei der Infunktionsnahme, insbesondere beim festen Verschrauben, zur Verfügung gestellt wird. Zum anderen vermindert ein flacher Winkel aufgrund der geringen Flächenpressung den Kraftschluss und damit den Halt des Abutments und führt gegebenenfalls zu einer Abkippung des Abutments im Verhältnis zum Implantat.

Aus der US 2009/0111072 ist ein Dentalimplantat gemäß dem Oberbegriff des Anspruchs 1 bekannt.

Der Erfindung liegt daher die Aufgabe zugrunde, ein Dentalimplantat bereitzustellen, welches eine hohe Gesamtstabilität, Zuverlässigkeit und Lebensdauer aufweist. Weiterhin sollen ein entsprechendes Abutment, ein Implantatsystem und ein Implantationsset bereitgestellt werden.

In Bezug auf das Implantat wird diese Aufgabe erfindungsgemäß durch ein Dentalimplantat gemäß Anspruch 1 gelöst. In Bezug auf das Abutment wird diese Aufgabe durch ein Abutment gemäß Anspruch 6 gelöst.

Vorteilhafte Ausgestaltungen der Erfindung sind Gegenstand der Unteransprüche. Die Erfindung geht von der Überlegung aus, dass bei einer zahntechnischen Versorgung eines Patienten mit Zahnersatz die Langlebigkeit und Zuverlässigkeit des Dentalimplantates von entscheidender Bedeutung sind. Grundlegend dafür ist die Gesamtstabilität des Systems bestehend aus Implantat und Abutment. Die im Mund durch Kau-, Mahl oder Beißbewegungen entstehenden Kräfte werden über das Abutment an das Implantat und von dort in den Knochen übertragen. Aus diesem Grund sind für die Stabilität insbesondere auch die Schnittstellen bzw. Übergänge von Abutment zu Implantat und von Implantat zu Knochen relevant. Zur Erfüllung der oben genannten Anforderungen sollten die über das Abutment eingeleiteten Kaukräfte, insbesondere Schubbelastungen, in vertikaler Richtung möglichst tief in das Implantat eingeleitet werden. Zudem sollte die dynamische elastische Lasteinwirkung auf den Knochen möglichst gering gehalten werden.

Die tiefe Übertragung von Schubbelastungen lässt sich mit einem eher flachen Konus nicht erreichen, da dieser aufgrund des vorgegebenen Implantataußendurchmessers nicht weit genug in vertikaler Richtung in das Implantat hinreicht. Wie aber nunmehr erkannt wurde, wird diese Aufgabe von einem steilen Konus mit Konuswinkeln im Bereich von 1° bis 3°, dem so genannten Morsekegel, erreicht. Der steile Winkel erlaubt bei vorgegebener Implantatlänge und Dicke die Realisierung einer vergleichsweise langen Schnittstelle. Durch einen sich an den steilen, konusförmigen Abschnitt anschließendes Indexierungs-bzw. Retentionsabschnitt können Kräfte noch tiefer in das Implantat eingeleitet werden. Der steile Winkel führt zudem zu einem gleichmäßigen und vergleichsweise langsamen Zuwachs der Implantatwandstärke. Daraus folgt, dass der Querschnitt mit steigender Tiefe vergleichsweise langsam abnimmt. Dadurch wird ein Retentionsabschnitt mit vergleichsweise großem Querschnitt ermöglicht, der naturgemäß nicht größer sein darf als der kleinste Durchmesser des Konusabschnittes, da ansonsten das Abutment nicht durchgeführt werden könnte.

Eine Nut definiert eine Vorzugsrichtung und eine Ausrichtung. Sind mehrere Nuten in regelmäßigem Abstand voneinander vorgesehen, wird dadurch eine mehrzählige Symmetrie definiert. Durch den großen Querschnitt und wenigstens eine Nut entsteht eine große Kontaktfläche, über die Kräfte weitergeleitet werden können. Diese vergleichsweise große Kontaktfläche zwischen Abutmentaußen- und Implantatinnengeometrie und das sich über den Implantatquerschnitt ergebene Implantatvolumen reduzieren die Auswölbung des Implantatkörpers. Dadurch wird die elastische Verformung des Implantatkörpers verringert, wodurch die oben genannte Lasteinwirkung auf den Knochen reduziert wird.

Wie darüber hinaus erkannt wurde, eröffnet eine nunmehr vorgeschlagene Ausgestaltung des Implantats die Möglichkeit, ohne zusätzliche Verbindungselemente, wie beispielsweise eine Fixierschraube, eine besonders starke dauerlastfeste Verbindung zu einem Abutment aufgrund der Selbsthemmung bzw. Kaltverschweißung des Morsekonus zu erreichen, ohne dass auf eine definierte Auswahl von Indexierungsrichtungen verzichtet werden muss. Natürlich kann zusätzlich auch die Fixierung von Abutment und Implantat durch ein Verbindungselement erfolgen bzw. unterstützt werden, wodurch die Dauerlastfestigkeit noch erhöht werden kann.

Durch die Möglichkeit, auch ohne zusätzliches Verbindungselement eine dauerlastfeste Implantat - Abutment Verbindung herzustellen, ist die Herstellung besonders kurzer Implantate möglich, bei denen auf das Innengewinde im Implantat verzichtet wird. Diese kurzen Implantatformen sind besonders vorteilhaft im Einsatz bei geringem vertikalem Knochenangebot und zur Vermeidung von invasiven knochenaufbauenden chirurgischen Maßnahmen.

Die dentale Zahntechnik erfordert in der Herstellung von zahntechnischen Konstruktionen eine hohe vertikale Präzision, da im menschlichen Kiefer die Kauebenen fein aufeinander abgestimmt sind. Diese hohen Anforderungen an die vertikale Toleranz standen bisher oft der Verwendung des so genannten Morsetapers bzw. Morsekegels entgegen, da die herkömmliche Auffassung besagte, dass sich diese Bauart nicht ohne weiteres mit einem daran anschließenden Indexierungsteil kombinieren lässt. Insbesondere wenn das Abutment im konischen Abschnitt zu tief in das Implantat eindringt bzw. in ihm versinkt, kann es im rotationsgesicherten Bereich an dessen Ende stoßen, so dass die gewollte Kaltverschweißung im Konusbereich nicht eintritt. Andererseits führt eine zu wenig starke Eindringung des Abutments in den rotationsgesicherten Bereich zu ungenügender Verdrehsicherheit.

Es wurde nun aber überaschenderweise erkannt, dass sich die Anforderung an geringe vertikale Toleranzen fertigungstechnisch meistern lässt und dass sich diese vertikalen Toleranzen in wirtschaftlich sinnvollen Bereichen (d. h., der Ausschuss kann klein genug gehalten werden) so gering halten lassen, dass die erfindungsgemäße Ausgestaltung technisch realisierbar ist.

Im Rahmen dieser Anmeldung bezeichnet "Implantat" die Komponente, die unmittelbar im Knochen verankert wird und ein Abutment aufnimmt, welches in das Implantat eingesetzt und insbesondere mit ihm verschraubt wird. Als Implantatsystem wird die Kombination aus Implantat, zugehörigem Abutment und gegebenenfalls weiteren Komponenten, z. B. einer Fixierschraube, bezeichnet.

Der Indexierungsabschnitt schließt sich bevorzugt vom koronalen Ende gesehen, insbesondere unter Bildung einer Stufe, direkt an den Konusabschnitt an. Alternativ dazu kann auch ein konischer oder zylindrischer Zwischenabschnitt vorgesehen sein, der beispielsweise als Führungsabschnitt dienen kann.

Erfindungsgemäß beträgt der Konuswinkel zwischen 1° und 3°, insbesondere 1,4°. Ein derart steiler Konus fördert die Neigung zur Kaltverschweißung und damit zur mechanischen Festigung der Verbindung zwischen Abutment und Implantat im zusammengesetzten Zustand. Dadurch wird auch eine besonders hohe Dichtigkeit gegenüber Bakterien erzielt.

Erfindungsgemäß weist die jeweilige Nut zwei Seitenflächen auf, die jeweils senkrecht zu einer gemeinsamen Stirnfläche stehen, welche senkrecht auf einer radial von einer Implantatmittelachse ausgehenden gedachten Linie steht. Bei einem Eingriff einer zu dieser Nut formkongruenten Nocke eines Abutments entstehen bei gegenseitigen Verdrehungen keine Seitenreibungskräfte, und die Kräfte werden von den Flächen des Abutments im Wesentlichen in Normalrichtung an das Implantat weitergeleitet.

Die Nuten sind als parallelwandige Prismen ausgebildet, wobei die Seitenflächen im Wesentlichen parallel zur Mittelachse des Implantats verlaufen. Wird ein Abutment in das Implantat eingeführt mit wenigstens einer Nocke, die mit der auf diese Weise ausgestalteten Nut in Eingriff bringbar ist, entstehen bei rotatorischen Gegenbewegungen von Implantat und Abutment keine Schubreibungen, wie sie beispielsweise entstehen, wenn die Schnittstelle aus einem Innensechskant des Implantats und einem darin in Formschluss bringbaren Außensechskant des Abutments gebildet ist. Durch die vorgesehene Form der Nut werden bei einer gegenseitigen Verdrehung von Abutment und Implantat die dabei entstehenden Kräfte im Wesentlichen senkrecht in die Flächen eingeleitet, so dass Verformungen der Flächen vermieden werden. Bei hohen anliegenden Drehmomenten und den Anpressungen der Außenflächen des Abutments an die Innenflächen des Implantats wird aufgrund der senkrechten und gleichmäßigen Einleitung der Kräfte die - in diesem Abschnitt ungewollte - Tendenz zur Kaltverschweißung stark verringert.

Erfindungsgemäß sind genau vier Nuten im regelmäßigen Abstand entlang des Kreisumfangs angeordnet. Eine derartige Ausführung entspricht in ihrer Formgestaltung der Nuten gewissermaßen dem "Schweizer Kreuz".

Erfindungsgemäß liegt das Verhältnis eines Freiwinkels, entlang dessen am Kreisumfang überstrichenen Bereiches keine Nut angeordnet ist und eines Nutwinkels, entlang dessen am Kreisumfang überstrichenen Bereiches eine Nut angeordnet ist, zwischen 1,0 und 0,5 insbesondere zwischen 0,61 und 0,84. Ein Verhältnis von 1,0 bedeutet bei den vier vorgesehen Nuten, dass die beiden Winkel Freiwinkel und Nutwinkel gleich groß sind und damit die Beträge der jeweils überstrichenen Kreisumfangsabschnitte beziehungsweise jeweils die entsprechende Bogenlänge dieses Kreisumfangabschnittes gleich groß sind. Ist das Verhältnis geringer als 1,0, so ist die Bogenlänge des Kreisumfanges entlang einer Nut größer als diejenige ohne Nut. Umso kleiner das Verhältnis ist, umso breiter sind die Nuten bei gleichbleibendem Kreisumfang.

Ein Verhältnis im Bereich von 0,61 und 0,84 ist dabei besonders vorteilhaft, da dadurch das Verhältnis aus Tiefe der Nuten bzw. Seitenfläche und Gesamtabstand der Nuten zueinander mechanisch günstig ist. Durch die relativ große Stirnflächenbreite erhöht sich proportional die Seitenfläche. Die Seitenfläche soll zur Übertragung der notwendigen Eindrehmomente und zur Vermeidung von einer Kaltverschweißung möglichst groß sein. Andererseits soll der Gesamtabstand der Nuten möglichst kein sein, damit die Querschnittfläche des Implantatkörpers und das Flächenträgheitsmoment unter Biege- und Torsionsbelastung möglichst groß sind.

Weiterhin ist fertigungstechnisch die Herstellung einer breiten Nut mit geringer Nutentiefe mit höchster Präzision besser zu gewährleisten als eine schmale tiefe Nut.

Abschließend reduziert sich bei einer breiten Nut der eingeschlossene Hohlraum, der als Volumen aus eingeschlossener Bogenlänge des Kreisumfanges zwischen zwei Nuten liegt und der verbindenden Geraden der Fläche des Abutments und der Seitenflächenlänge resultiert. Damit minimiert sich die mögliche Kontamination des Implantatinnenraums mit Flüssigkeiten und Bakterien.

Die drei grundsätzlichen Überlegungen sowie praktische Versuchsreihen haben zu der Feststellung geführt, dass das Verhältnis geringer als 1,0, wobei also die Bogenlänge des Kreisumfanges entlang einer Nut größer ist als diejenige ohne Nut, vorteilhaft für die Ausgestaltung des Indexierungsabschnittes der Implantat-Abutment-Schnittstelle ist.

Am Indexierungsabschnitt ist vorteilhafterweise eine zirkuläre Auflagefläche zur Unterstützung des Einfädelns für ein Abutment gebildet. Dies erleichtert dem Arzt oder Zahntechniker das Einbringen und das Einpassen des Abutments, da das Einbringen und das Orientieren zwei getrennt voneinander und hintereinander ausführbare Bewegungsabläufe sind. Das Abutment kann zunächst soweit in das Implantat geschoben werden, bis es auf der Auflagefläche aufliegt. Danach kann durch Drehen des Abutments in die eine oder andere Richtung der Eingriff mit den Nuten erzielt werden. Daraufhin wird das Abutment in der nun festgelegten Orientierung in das Implantat weiter hineingeschoben bzw. hineingedrückt.

Vom koronalen Ende des Implantates her gesehen schließt sich an den Indexierungsabschnitt in einer bevorzugten Ausgestaltung ein Innenschraubgewinde an. Dieses nimmt dann zum Verschrauben des Abutments mit dem Implantat bzw. zum Fixieren des Abutments eine Fixierschraube auf.

Bei dem beschriebenen Implantat kann allerdings auch auf ein Innenschraubgewinde verzichtet werden, so dass die mechanische Verbindung zwischen dem Implantatkörper und einem Abutment nur über die Kaltverschweißung der Kontaktfläche des Morsekonus gewährleistet wird. Eine dauerlastfeste Verbindung lässt sich aufgrund des gewählten Konuswinkel erreichen allein aufgrund der Selbsthemmung des steilen Morsekonus. In einer alternativen Ausführungsform weist das Implantat also kein Innenschraubgewinde auf. Auf eine definierte Indexierung muss aber dennoch nicht verzichtet werden.

In Bezug auf das Abutment wird die oben genannte Aufgabe erfindungsgemäß gelöst mit einem Abutment zum Einsetzen in ein Dentalimplantat, insbesondere ein oben beschriebenes Dentalimplantat, mit einem Konusabschnitt und einem Indexierungsabschnitt, wobei der Konusabschnitt einen Konuswinkel von weniger als 3° aufweist.

Erfindungsgemäß weist der Indexierungsabschnitt eine Anzahl an einem Kreisumfang angeordneter Nocken auf, die mit Nuten eines Dentalimplantats in Eingriff bringbar sind. Nocken und Nuten bilden dabei eine rotationsgesicherte Verbindung. In einer derartigen Konfiguration lässt sich das Abutment in einer Anzahl von definierten Orientierungen in das Implantat einsetzten, wobei die Orientierungen dadurch bestimmt sind, dass Nocke(n) und Nut(en) zur Bildung einer formschlüssigen Verbindung jeweils ineinander greifen.

Erfindungsgemäß sind genau vier Nocken vorgesehen, die im regelmäßigen Abstand entlang eines Kreisumfanges angeordnet sind. Die Nocken weisen eine sich an den Kreisumfang anschmiegende rechteckige Kontur auf und sind als Primen ausgebildet, die sich entlang einer Mittelachse des Abutments erstrecken.

Im Abutment ist vorteilhafterweise im Bereich des Schraubenkanals ein Innenschraubgewinde vorgesehen. Durch Einschrauben eines Spezialwerkzeuges in das Abutment kann das Abutment - trotz möglicherweise erfolgter Kaltverschweißung im konischen Bereich - wieder aus dem Implantat gelöst werden.

In Bezug auf das Implantatsystem wird die oben genannte Aufgabe erfindungsgemäß gelöst mit einem oben beschriebenen Dentalimplantat und einem oben beschriebenen Abutment, wobei die Konusabschnitte von Dentalimplantat und Abutment derart bemessen sind, dass sie sich wenigstens teilweise berühren, insbesondere im zusammengesetzten Zustand eine selbsthemmende Verbindung eingehen.

Die jeweiligen Konusabschnitte und Indexierungsabschnitte von Implantat und Abutment sind dabei vorteilhafterweise derart bemessen und aufeinander in ihrer Formgebung abgestimmt, dass im konischen Teil eine möglichst große Berührungsfläche geschaffen wird und dass sich gleichzeitig die Indexierungsabschnitte möglichst weit überlappen. Insbesondere sind dabei vorzugsweise jeweils die Konuswinkel bei Implantat und Abutment identisch bzw. stimmen weitestgehend überein. Eine derartige Konfiguration wird ermöglicht durch möglichst geringe Fertigungstoleranzen der Innen- bzw. Außengeometrie von Implantat bzw. Abutment.

In einem Beispiel weist das Abutment statt eines Indexierungsabschnittes einen zylindrischen Führungsabschnitt auf, der in den Indexierungsabschnitt des Dentalimplantats einsetzbar ist. Das heißt, das Implantat weist zwar weiterhin einen Indexierungsabschnitt mit wenigstens einer Nut auf. Dieser Indexierungsabschnitt wird aber durch das Abutment nur partiell genutzt, nämlich nicht zur Festlegung einer definierten Indexierung, sondern als Führungsbereich bei der Einführung des Abutments in das Implantat, was in eingesetztem Zustand zu einer starken Festigkeit führt.

In dem Abutment ist bevorzugt ein Durchgangskanal für die Durchführung einer Fixierschraube vorgesehen ist. Die Fixierschraube wird in eingesetztem Zustand durch das Abutment in das Implantat geführt, wo sie in dem Innenschraubgewinde des Implantates festgedreht wird. In einer derartigen Konfiguration wird die dauerhafte Verbindung der beiden Komponenten nicht nur durch die Kaltverschweißung der Konusabschnitte, sondern auch durch die eingesetzte Schraube realisiert.

In Bezug auf das Implantationsset wird die oben genannte Aufgabe gelöst mit einem oben genannten Dentalimplantat und wenigstens einem Hilfselement aus der Gruppe: Abformpfosten, Gingiva-Former, Einbringpfosten. Das Implantationsset umfasst weiterhin bevorzugt ein oben beschriebenes Abutment.

Die Vorteile der Erfindung liegen insbesondere darin, dass durch eine Verbindung eines Morsekegels mit einem sich anschließenden Indexierungsabschnitt und die sich daraus ergebende Möglichkeiten der tiefen Einleitung von auf das Abutment wirkenden Kräften ein Implantat und ein Implantatsystem mit hoher Zuverlässigkeit und Lebensdauer geschaffen werden.

Durch die Ausgestaltung des Konusabschnittes als Morsekonus bzw. Morsekegel werden eine hohe Selbsthemmung durch Reibschluss und die Neigung zur Kaltverschweißung realisiert. Dadurch wird eine form- und kraftschlüssige Verbindung zwischen Abutment und Implantat hergestellt. Aufgrund der Kaltverschweißung wird auch eine maximale funktionale Abdichtung gegen Kontamination realisiert. Insbesondere bei einer Implantatschnittstelle, welche über eine Länge von 4 mm im Implantat verankert ist, sollten auch unter dynamischer Belastung nur eine minimale Aufweitung und Ausstulpung der Kontaktflächen auftreten. Damit ist eine maximale Dichtigkeit gegen eintretende Flüssigkeiten und Bakterien gewährleistet.

Durch die aufgrund der Innengeometrie reduzierte elastische Verformung und damit reduzierte Lasteinwirkung auf den Knochen wird die Tendenz zum Knochenabbau verringert.

Durch parallelwandige Seitenflächen der Nuten zur Rotationssicherung mit ihrer Ausrichtung von 0° auf eingeleitete Drehmomente wird eine besonders vorteilhafte Formgestaltung realisiert, bei der keine Schubreibungen entstehen, die beispielsweise durch eine schräge Krafteinleitung bei einem Sechskant entstehen würden. Somit besteht nicht die Neigung, dass hohe Drehmomente beim Einschrauben des Implantates mit hohen Flächenpressungen auf die Übertragungsflächen zu einer Kaltverschweißung der Retentionsflächen führen. Das heißt, im Konusteil kann eine gewollte Kaltverschweißung zielgerichtet umgesetzt werden, während gleichzeitig eine unerwünschte Kaltverschweißung im Indexierungsteil vermieden werden kann.

Durch eine sich an den Konus anschließende zirkuläre Auflagefläche kann sich das Abutment beim Eingliedern abstützen, ohne dass es zu einem Verkannten in einer Zwischenposition kommen kann. Der behandelnde Zahntechniker oder Arzt kann durch Drehen des Abutments in eine beliebige Richtung den Index der Schnittstelle finden. Dabei gleitet das Abutment sanft und quasi automatisch mit den Nocken in die Innenkontur der Implantatschnittstelle.

Ein Ausführungsbeispiel der Erfindung wird anhand einer Zeichnung näher erläutert. Darin zeigen in stark schematischer Darstellung:

FIG. 1    ein Dentalimplantat mit einem Konusabschnitt und einem Indexierungsabschnitt in einer bevorzugten Ausführungsform in einem seitlichen Schnitt,

FIG. 2    das Dentalimplantat gemäß FIG. 1 in einem perspektivischen Schnitt,

FIG. 3    den Innenbereich des Dentalimplantat gemäß FIG. 1 und 2 in einem Querschnitt,

FIG. 4    ein Abutment in einer ersten bevorzugten Ausführungsform in einer perspektivischen Darstellung,

FIG. 5    das Abutment gemäß FIG. 4 in einem seitlichen Schnitt,

FIG. 6    das Abutment gemäß FIG. 4 und 5 in einem Querschnitt,

FIG. 7    ein Abutment, das in ein erfindungsgemäßes Dentalimplantat eingesetzt werden kann, in einer perspektivischen Darstellung,

FIG. 8    das Abutment gemäß FIG. 7 in einem seitlichen Schnitt,

FIG. 9    ein Implantatsystem mit einem Dentalimplantat gemäß der FIG. 1 bis 3 und einem Abutment gemäß der FIG. 7 und 8,

FIG. 10    das Implantatsystem nach FIG. 9 in einem seitlich-perspektivischen Schnitt,

FIG. 11    ein Implantatsystem mit einem Dentalimplantat gemäß der FIG. 1 bis 3 und einem Abutment gemäß der FIG. 4 bis 6 in einer perspektivischen Darstellung von außen,

FIG. 12    das Implantatsystem gemäß FIG. 11 in einem perspektivischen Schnitt,

FIG. 13    einen Abformpfosten für ein Implantationsset in einer ersten bevorzugten Ausführungsform in einer perspektivischen Darstellung,

FIG. 14    den Abformpfosten gemäß FIG. 13 in einem seitlichen Schnitt,

FIG. 15    den Abformpfosten gemäß FIG. 13 und 14 in einem Querschnitt,

FIG. 16    einen Abformpfosten für ein Implantationsset in einer zweiten bevorzugten Ausführungsform in einer perspektivischen Darstellung,

FIG. 17    den Abformpfosten gemäß FIG. 16 in einem seitlichen Schnitt,

FIG. 18    den Abformpfosten gemäß FIG. 16 und 17 in einem Querschnitt,

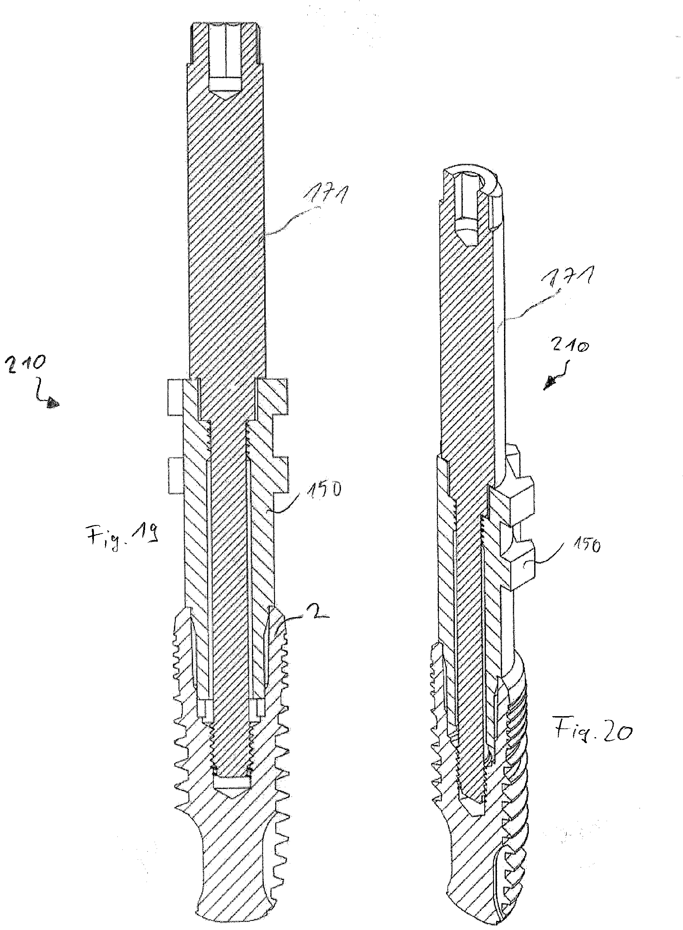

FIG. 19    ein Implantationsset mit einem Abformpfosten gemäß der FIG. 16 bis 18, einer Fixierungsschraube und einem Dentalimplantat gemäß der FIG. 1 bis 3 in einer bevorzugten Ausführungsform in einem seitlichen Schnitt,

FIG. 20    das Implantationsset gemäß FIG. 19 in einem perspektivischen Schnitt,

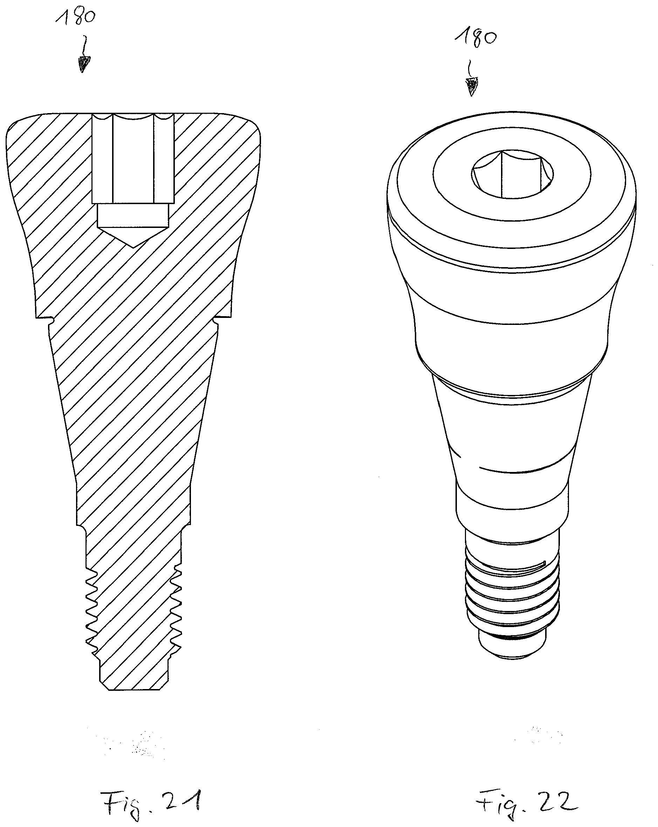

FIG. 21    einen Gingiva-Former für ein Implantations-Set in einer bevorzugten Ausführungsform in einem seitlichen Schnitt,

FIG. 22    den Gingiva-Former gemäß FIG. 21 in einer perspektivischen Darstellung,

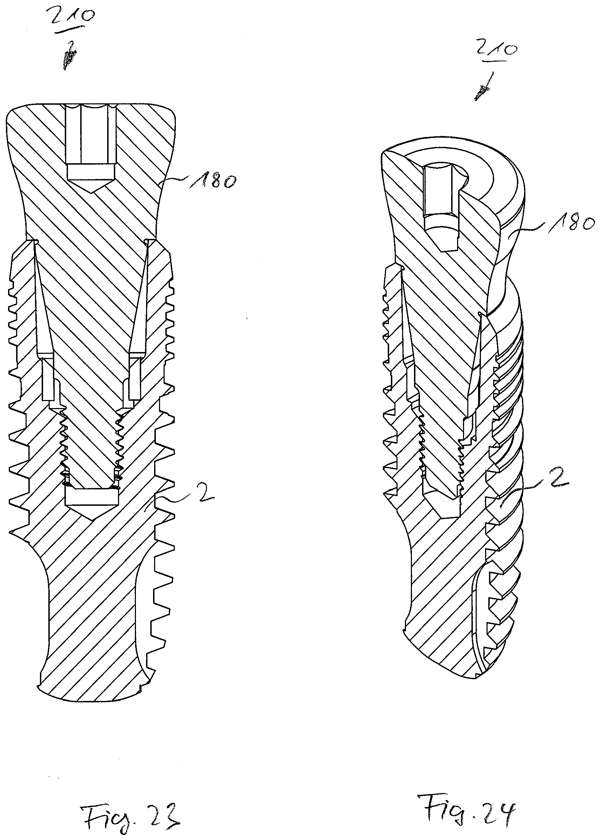

FIG. 23    ein Implantationsset mit einem Gingiva-Former gemäß der FIG. 21 und 22 und einem Dentalimplantat gemäß der FIG. 1 bis 3 in einer bevorzugten Ausführungsform in einem seitlichen Schnitt,

FIG. 24    das Implantationsset gemäß FIG. 23 in einem perspektivischen Schnitt,

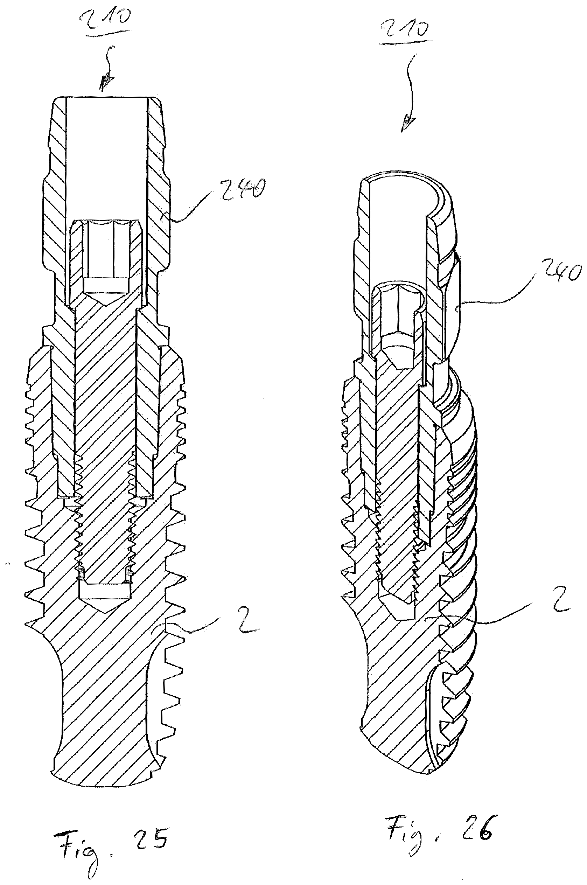

FIG. 25    ein Implantationsset mit einem Einbringpfosten und einem Dentalimplantat gemäß der FIG. 1 bis 3 in einer bevorzugten Ausführungsform in einem seitlichen Schnitt,

FIG. 26    das Implantationsset gemäß FIG. 25 in einem perspektivischen Schnitt, und

FIG. 27    eine Darstellung des Querschnitts eines Dentalimplantats zur Erläuterung des Freiwinkels und des Nutwinkels.

Gleiche Teile sind in allen Figuren mit denselben Bezugszeichen versehen.

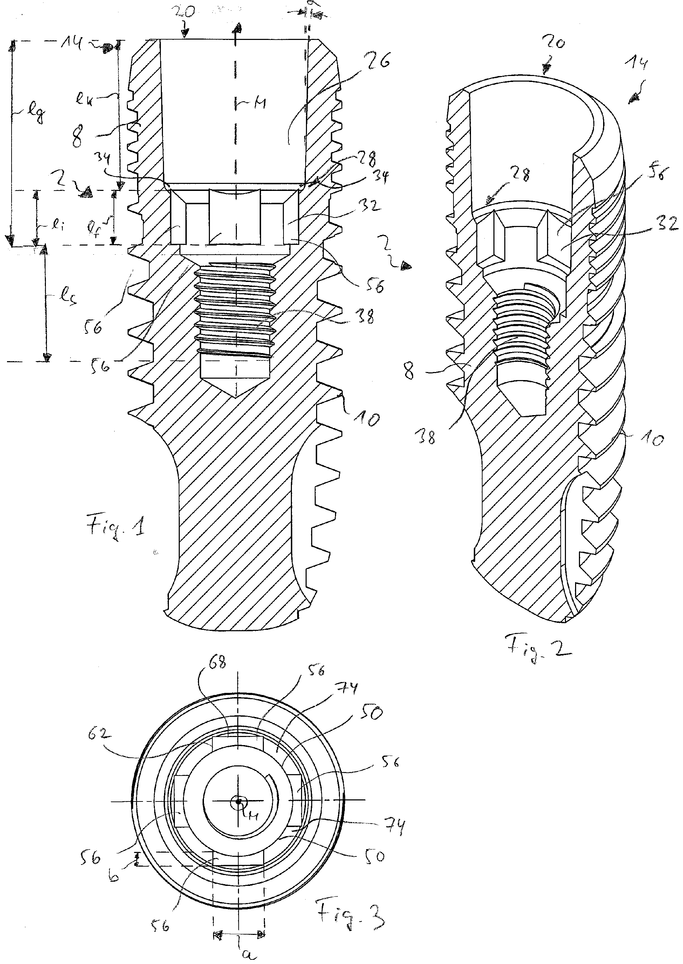

Ein in FIG. 1 in einem seitlichen Schnitt und in FIG. 1 in einem perspektivischen Schnitt dargestelltes Dentalimplantat 2 weist einen aus im Wesentlichen Reintitan Grade 4 bestehenden Implantatkörper 8 auf mit einem Außengewinde 10. Andere bevorzugte Materialien sind beispielsweise Titan Grade 5 oder Titanlegierungen.

An einem koronalen Ende 14 weist das Dentalimplantat 2 eine 20 Aufnahmeöffnung zur Aufnahme eines Abutments auf. Aus Richtung des koronalen Endes 14 gesehen weist die Aufnahmeöffnung 20 einen um eine Mittelachse M rotationssymmetrischen Konusabschnitt 26 und einen - unter Bildung einer Stufe 28 - sich im Wesentlichen anschließenden Indexierungsabschnitt 32 auf. Daran schließt sich ein Schraubgewinde 38 an, welches als Innenschraubgewinde ausgebildet ist und zur Aufnahme einer Fixierschraube dient, durch die ein Abutment mit dem Implantat verschraubt werden kann.

Das Dentalimplantat 2 ist dazu ausgebildet, die auf das Abutment bzw. den künstlichen Zahnersatz, welcher an dem Abutment befestigt wird, wirkenden Kräfte, die insbesondere durch Kau-, Mahl- und Beißbewegungen entstehen, möglichst gleichmäßig und tief in das Implantat abzuleiten. Dazu wird gleichzeitig eine tiefe konische Verbindung mit Neigung zur Kaltverschweißung kombiniert mit einer rotationsgesicherten Verbindung.

Ein Konuswinkel $\alpha$ des Konusabschnittes 26 (d. h. der Winkel zwischen einer gedachten Linie parallel zur Mittelachse des Dentalimplantats 2 und einer gedachten Linie durch die Außenfläche des Implantats) beträgt 1,4°, so dass der Konusabschnitt 26 somit als Morsekonus ausgebildet ist. Der Konuswinkel $\alpha$ entspricht dabei der Hälfte des so genannten Gesamtkonuswinkels. Ein derart steil ausgebildeter Konus erlaubt einen vergleichsweise lang ausgebildeten konischen Abschnitt, in dem Abutment und Implantat eine sowohl form- als auch kraftschlüssige Verbindung eingehen. Aufgrund der großen Berührungsfläche können Kräfte vom Abutment tief in das Implantat weitergeleitet werden. Aufgrund des sich anschließenden rotationsgesicherten Teils können Kräfte noch tiefer eingeleitet werden, wobei dort auch Drehkräfte abgefangen werden. Es ist insgesamt also ein sehr tiefer Kraftübergang möglich.

Der Konusabschnitt 26 hat im vorliegenden Ausführungsbeispiel eine Konuslänge $l_k$ von 3 mm. Der Radius des Konusabschnittes 26 verjüngt sich in einem an den Indexierungsabschnitt 32 angrenzenden Übergangsabschnitt 34 in der Art einer konvexen Kontur. Dieser sich radial verjüngende Bereich bildet die abgerundete Stufe 28 zwischen dem Konusabschnitt 26 und dem Indexierungsabschnitt 32.

Eine Indexierungslänge $l_i$, die die Länge des Indexierungsabschnittes 32 angibt, beträgt 1 mm, so dass eine Gesamtlänge $l_g$, die Summe aus Konuslänge $l_k$ und Indexierungslänge $l_i$, 4 mm beträgt. Das Schraubgewinde 38 weist eine Schraubgewindenlänge $l_s$ von 2,3 mm auf.

Der Indexierungsabschnitt 32 ist in einem Querschnitt in FIG. 3 dargestellt. Entlang eines Kreisumfanges 50 sind vier Nuten 56 angeordnet in einer Konfiguration, die an das "Schweizer Kreuz" erinnert. Jede der vier Nuten weist jeweils Seitenflächen 62 auf, die jeweils senkrecht zu einer gemeinsamen Stirnfläche 68 stehen.

Die Seitenflächen 62 haben bevorzugt - in Richtung der Mittelachse M - eine Länge $l_f$ von 0,8 mm bis 1,5 mm, insbesondere und im vorliegenden Ausführungsbeispiel 1 mm. Die Länge $l_f$ entspricht hierbei der Länge $l_i$ des Indexierungsabschnittes 32. Eine Stirnflächenbreite a beträgt bevorzugt je nach Schnittstellendurchmesser 0,7 mm bis 1,0 mm, und die Tiefe der Nuten bzw. Seitenflächentiefe b beträgt bevorzugt je nach Schnittstellendurchmesser 0,1 mm bis 0,4 mm. Im dargestellten Ausführungsbeispiel beträgt die Länge $l_f$ 1,0 mm, Die Stirnflächenbreite a ist 1,0 mm und die Seitenflächentiefe b beträgt 0,30 mm.

Der Indexierungsabschnitt 32 umfasst gewissermaßen vier entlang des Kreisumfanges 50 angeordnete parallelwandige Prismen, die in axialer Richtung jeweils 1 mm hoch sind. Die Nuten 56 erstrecken sich dabei über die ganze Indexierungslänge $l_i$. Eine derartige Konfiguration ist geeignet für höchste Drehmomente und zeitigt keine Neigung zur Kaltverschweißung, sofern ein Abutment oder Eindrehwerkzeug eingesetzt wird, welches eine formkongruente Außenkontur aufweist, d. h., welches vier an einem Kreisumfang angeordnete Nocken aufweist, welche in die Nuten 56 in Eingriff bringbar sind. Zudem ist durch diese Schnittstelle ein minimales Rotationsspiel gegeben. Die Schnittstelle zwischen Implantat und Abutment ist als Nut-Nockenverbindung ausgebildet.

Durch die Ausnehmung von parallelwandigen Prismen bzw. Nuten 56 ist vom koronalen Ende 14 des Dentalimplantats 2 aus gesehen eine Auflagefläche 74 für ein Abutment gebildet. Ein Abutment, welches eine zur Innenform des Indexierungsbereiches 32 formkongruente Außenkontur mit vier Nocken aufweist, kann, bevor es zur endgültigen Fixierung in das Dentalimplantat 2 hingeschoben wird, auf der Auflagefläche 74 zunächst aufgesetzt werden. Durch Drehen des Abutments im oder entgegen zum Uhrzeigersinn kann die gewünschte Orientierung des Abutments gesucht werden. Sobald diese gefunden wurde, kann das Abutment dann in das Implantat geschoben werden. Durch die Auflagefläche 74 wird beim Einsetzen des Abutments eine intermediäre bzw. Zwischenposition definiert. Die Seitenflächen 62 und die Stirnfläche 68 dienen beim Einsetzen als Führungsflächen für das Abutment.

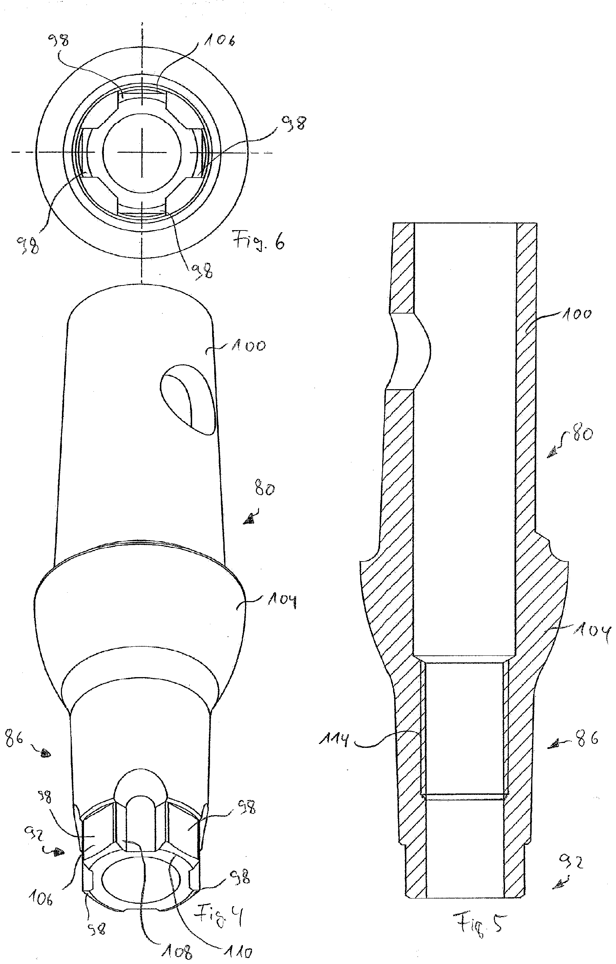

Ein Abutment 80 in einer ersten bevorzugten Ausführungsform ist in FIG. 4 perspektivisch dargestellt und weist einen Konusabschnitt 86 und einen Indexierungsabschnitt 92 auf. Der Konusabschnitt 86 weist einen Konuswinkel $\alpha$ auf, der dem Konuswinkel $\alpha$ des Dentalimplantates 2 entspricht. Bei Einführung des Abutments 80 in das Dentalimplantat 2 wird aufgrund des geringen Konuswinkel $\alpha$ eine selbsthemmende Verbindung mit Neigung zur Kaltverschweißung zwischen dem Konusabschnitt 86 des Abutments 80 und dem Konusabschnitt 26 des Dentalimplantats 2 realisiert.

Der Indexierungsabschnitt 92 des Abutments 80 weist vier als parallelwandige Prismen ausgebildete Nocken 98 auf, die mit den Nuten 56 des Dentalimplantats 2 im zusammengesetzten Zustand in Eingriff bringbar sind, wodurch durch Formschluss eine rotationsgesicherte Verbindung zwischen Dentalimplantat 2 und Abutment 80 hergestellt wird. Das Abutment 80 weist in einem koronalen Bereich ein Funktionsteil 100 zur Befestigung von künstlichem Zahnersatz, insbesondere zur Zementierung einer Krone, auf. Die Nocken 98 weisen eine zu den Nuten 56 des Dentalimplantats 2 formkongruente Kontur auf. Die Nocken 98 haben jeweils eine Stirnfläche 106 und zwei dazu senkrechte Seitenflächen 108 und sind entlang eines gedachten Kreisumfanges angeordnet. Zwischen dem Funktionsteil 100 und dem Konusabschnitt 86 weist das Abutment 80 einen Gingivaabschnitt 104 auf, welcher ein Emergenzprofil zur Ausformung der Gingiva aufweist. Ein Querschnitt durch das Abutment 80 ist in FIG. 6 dargestellt. Das Abutment 80 weist ein Innengewinde 114 bzw. Innenschraubgewinde zum Einführen eines Spezialwerkzeuges auf. Dadurch ist es möglich, das Abutment 80 von einem Dentalimplantat 2 wieder zu lösen, auch wenn die beiden Konusabschnitte 26, 86 bereits miteinander im kaltverschweißten Zustand sind.

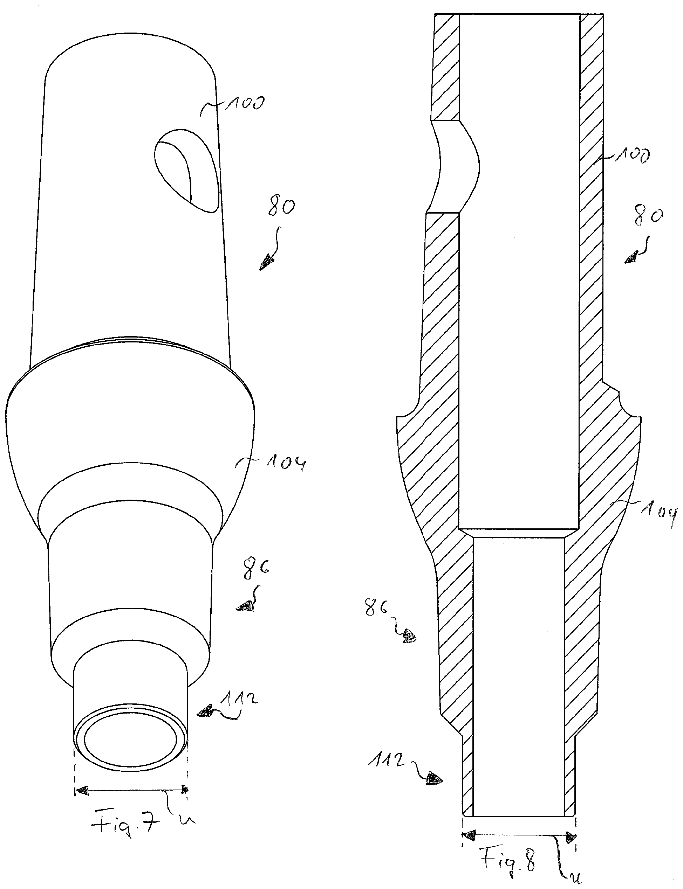

Ein Abutment 80, das nicht Teil der Erfindung ist, ist in FIG. 7 perspektivisch dargestellt. Das Abutment 80 gemäß FIG. 7 weist im Gegensatz zum Abutment 80 gemäß FIG. 4 keinen Indexierungsabschnitt auf. Stattdessen umfasst es einen zylindrischen Führungsabschnitt 112. Ein äußerer Durchmesser u ist derartig dimensioniert, dass er dem Durchmesser des Kreisumfanges 50 des Dentalimplantats 2 entspricht. Beim Einführen des hier gezeigten Abutments 80 in das Dentalimplantat 2 dient der Führungsabschnitt 112 allein zur Führung des Abutments 80, während es in das Dentalimplantat 2 abgesenkt wird. Eine Indizierung wird hierbei nicht bewirkt. Der behandelnde Arzt oder Zahntechniker kann somit die Ausrichtung des Abutments 80 in Bezug auf das Dentalimplantat 2 während des Einsetzvorganges frei wählen.

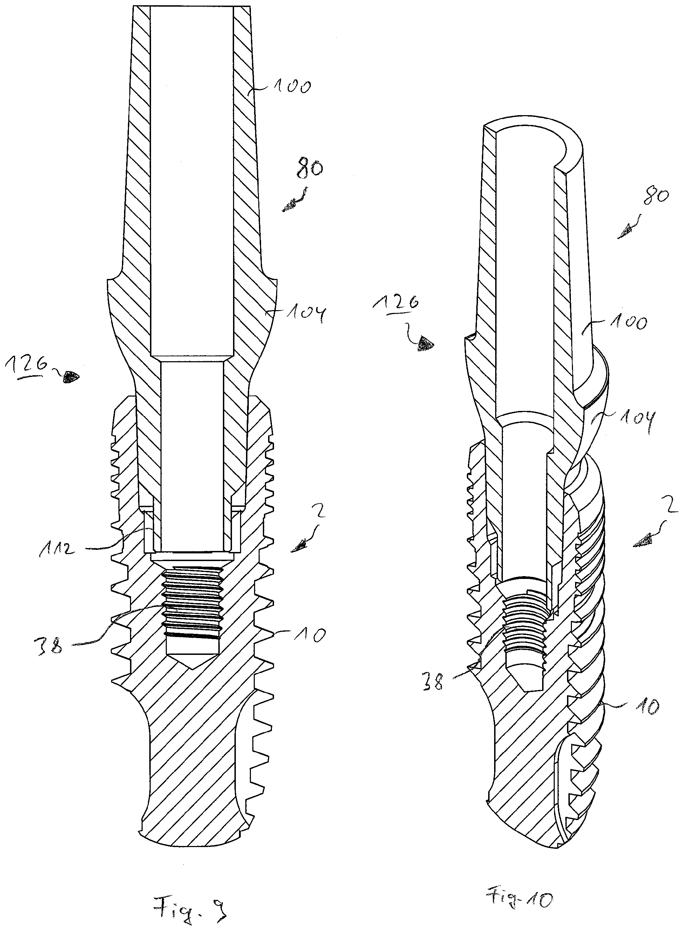

Die FIG. 9 und 10 zeigen ein Implantatsystem 126 in einer ersten bevorzugten Ausführung mit einem oben dargestellten Dentalimplantat 2 und einem Abutment 80 gemäß der FIG. 7 und 8, welches statt einem Indexierungsabschnitt einen Führungsabschnitt 112 aufweist. Das Abutment 80 ist vorliegend vollständig in das Dentalimplantat 2 eingesetzt und kann durch festes Zubeißen des Patienten auf die Krone verpresst werden oder mit einer - nicht dargestellten - Fixierschraube verschraubt werden.

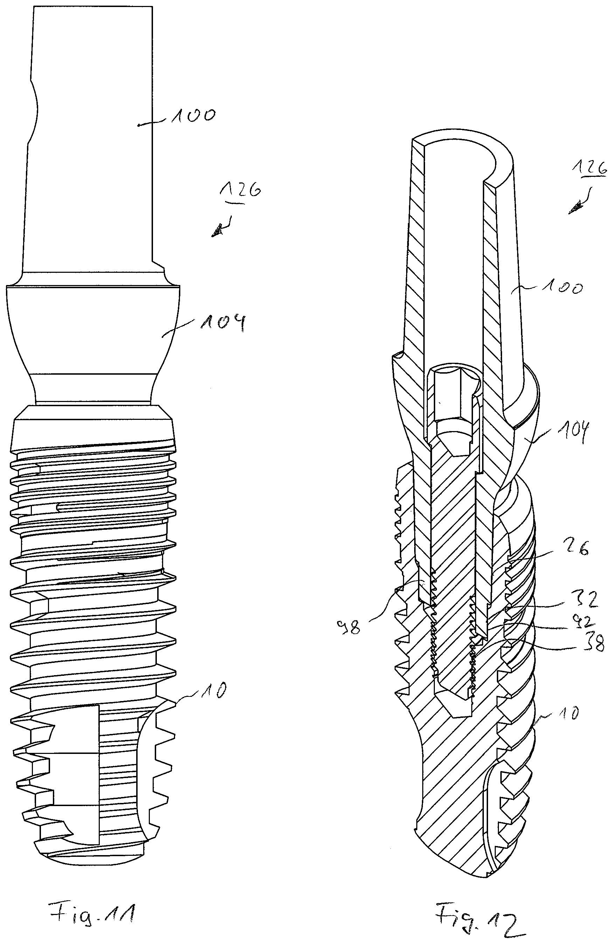

Die FIG. 11 und 12 zeigen ein Implantatsystem 126 in einer zweiten bevorzugten Ausführungsform, bei der das Abutment 80, welches in den FIG. 4, 5 und 6 dargestellt ist, einen Indexierungsabschnitt 92 mit vier Nocken 98 umfasst, so dass sich vier verschiedene Orientierungen in dem Indexierungsabschnitt 32 des Dentalimplantats 32 ergeben.

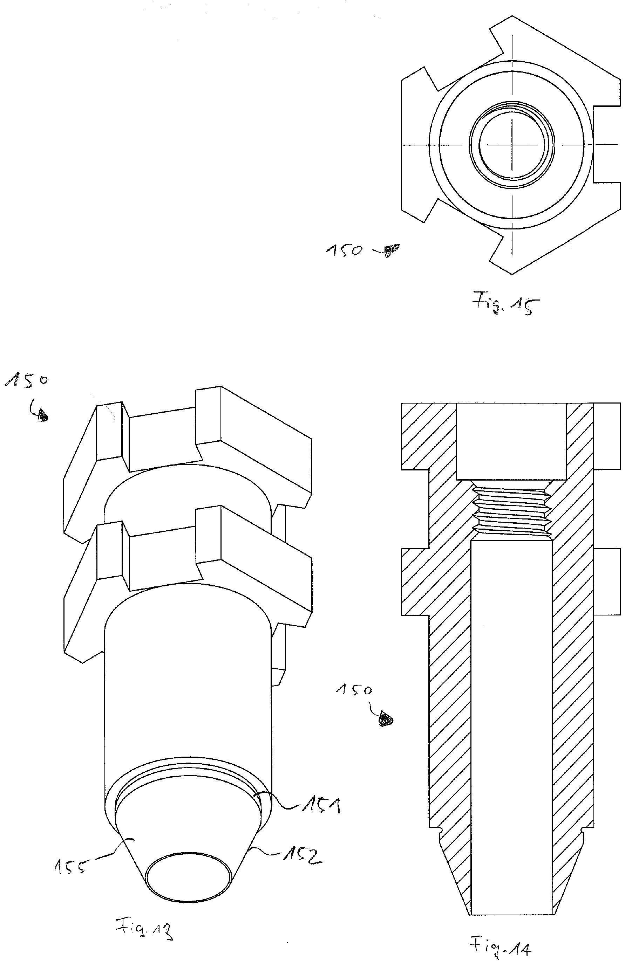

Ein in den FIG. 13 bis 15 dargestellter Abformpfosten 150 in einer ersten bevorzugten Ausführung weist einen konisch ausgebildeten Einsetzabschnitt 152 auf, welcher während des Abformungsprozesses in den Konusabschnitt 26 des Dentalimplantates 2 eingesetzt wird. Mit diesem speziellen Abformpfosten 150 können mehrere und auch untereinander stark divergent bzw. windschief stehende Implantate bzw. Dentalimplantate 2 abgeformt werden. Diese Implantate werden in der zahntechnischen Rekonstruktion als Gruppe zusammengefasst und somit untereinander verblockt. Aufgrund der Verblockung ist die Position und Lage des Indexes der Implantate nicht erforderlich. Das Anschlussdesign beginnt ab der Auflageschulter mit einem kurzen (0,3 mm langen) Konus 151, dessen Winkel mit dem Konuswinkel des Dentalimplantates 2 folgt. Darauf folgt ein weiterer Konus 155, dessen Winkel erheblich größer ist. Als besonders vorteilhaft hat sich ein Winkel von 25° bis 35° erwiesen. Der flache Konus 155 erleichtert das Abziehen des Abformlöffels durch eine sich ergebende gemeinsame Abzugsrichtung und bietet entsprechend genügende Möglichkeiten, zueinander angulierte Einbringpfosten aus den Implantaten zu ziehen, ohne dass sich die Abformmasse merklich verformt.

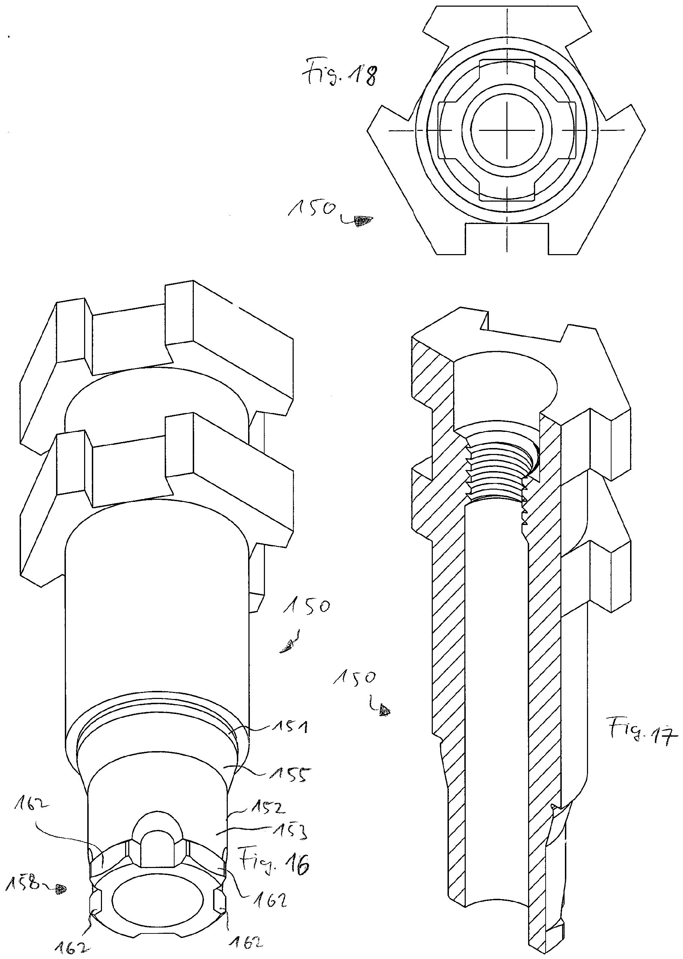

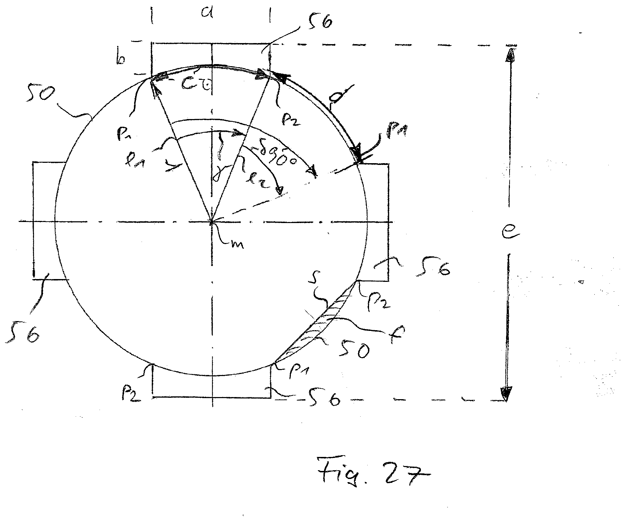

Ein in den FIG. 16 bis 18 dargestellter Abformpfosten 150 in einer zweiten bevorzugten Ausführung weist einen sich an einen als zylindrischer Übergangsbereich 153 ausgebildeten Einbringabschnitt anschließenden Indexierungsabschnitt 158 mit vier Nocken 162 auf, die bei der Abformung mit den Nuten 56 des Dentalimplantates zur Bildung einer formschlüssigen Verbindung in Eingriff bringbar sind, so dass die Orientierung bzw. Indizierung des Implantates im menschlichen Kiefer auf ein (Meister-)Modell übertragen werden kann. Das Anschlussdesign beginnt ab der Auflageschulter mit einem kurzen (0,3 mm langen) Konus 151, dessen Winkel mit dem Konuswinkel des Implantates folgt. Darauf folgt ein weiterer Konus 155, dessen Winkel erheblich größer ist. Als besonders vorteilhaft hat sich ein Winkel von 25° bis 35° erwiesen. Der zweite Konus mündet in einen zylindrischen Übergangsbereich 153, der den Übergang zum Indexierungsbereich 158 darstellt. In FIG. 27 ist der Querschnitt des Dentalimplantats 2 schematisch dargestellt. Entlang des Kreisumfanges 50 sind vier Nuten 56 angeordnet. Der Radius des den Kreisumfang 50 definierenden Kreises ist mit r bezeichnet. Die jeweilige Nut 56 hat mit dem Kreisumfang 50 zwei Berührungspunkte $p_1$, $p_2$. Der den zwischen diesen Berührungspunkten $p_1$, $p_2$ liegende Kreisabschnitt bzw. der ihn überstreichende Winkel ist ein Nutwinkel $\gamma$ bzw. Öffnungswinkel, die entsprechend überstrichene Nutbogenlänge des Kreises ist c. Zwischen den Berührungspunkt $p_2$ und einem den Berührungspunkt $p_1$ einer benachbarten Nut 56 wird ein Abschnitt des Kreisumfanges 50, dessen Freibogenlänge mit d bezeichnet wird, überstrichen, wobei ein zugehöriger Freiwinkel mit $\delta$ bezeichnet wird. Der Nutwinkel $\gamma$ bzw. der Öffnungswinkel ist der Winkel zwischen zwei durch den Mittelpunkt m des den Kreisumfang 50 definierenden Kreises und den Berührungspunkten $p_1$, $p_2$ verlaufenden gedachten Linien $l_1$ und $l_2$. Es gilt:

$$\gamma = 2 * arc\sin\frac{\frac{a}{2}}{r},$$

$$c = \frac{\pi * r * \gamma}{180}, \quad d = \frac{\pi * r * 90}{180} - c$$

Dabei sind die Einheiten von $\gamma$ und $\delta$ Grad (°), c und d sind jeweils als Bogenlängen ausgedrückt. Das Verhältnis von Freiwinkel zu Nutwinkel, also $\delta/\gamma$ bzw. d/c, beträgt bei dem in FIG. 1 ff. dargestellten Dentalimplantat 2 0,61.

Ein Verhältnis im Bereich von 0,61 und 0,84 ist dabei besonders vorteilhaft, da dadurch das Verhältnis aus Tiefe der Nuten bzw. Seitenfläche b und Gesamtabstand der Nuten zueinander mechanisch günstig ist. Durch die relativ breite Stirnflächenbreite a erhöht sich proportional die Seitenflächentiefe b. Die Seitenflächentiefe b soll zur Übertragung der notwendigen Eindrehmomente und zur Vermeidung von einer Kaltverschweißung möglichst groß sein. Andererseits soll der Gesamtabstand der Nuten e möglichst kein sein, damit die Querschnittfläche des Implantatkörpers und das Flächenträgheitsmoment unter Biege- und Torsionsbelastung möglichst groß sind.

Weiterhin ist fertigungstechnisch die Herstellung einer breiten Nut (Stirnflächenbreite a) mit geringer Nutentiefe (Seitenflächentiefe b) mit höchster Präzision besser zu gewährleisten als eine schmale tiefe Nut.

Abschließend reduziert sich bei einer breiten Nut der eingeschlossene Hohlraum bzw. ein Volumen f, nämlich gewissermaßen der Hohlraum des Indexzwischenbereichs, der aufgespannt wird von der Fläche zwischen einer Bogenlänge des Kreisumfanges zwischen zwei Nuten, die begrenzt wird von einem Berührungspunkt $p_2$ einer Nut und dem Berührungspunkt $p_1$ einer benachbarten Nut, und einer durch diese beiden Punkte verlaufenden Sekante s, und einer dazu senkrecht stehenden Linie mit der Seitenflächenlänge $l_f$. Damit minimiert sich die mögliche Kontamination des Implantatinnenraums mit Flüssigkeiten und Bakterien.

Bezugszeichenliste

| | |
|---|---|
| 2 | Dentalimplantat |
| 8 | Implantatkörper |
| 10 | Außengewinde |
| 14 | koronales Ende |
| 20 | Aufnahmeöffnung |
| 26 | Konusabschnitt |
| 28 | Stufe |
| 32 | Indexierungsabschnitt |
| 34 | Übergangsabschnitt |
| 38 | Schraubgewinde |
| 50 | Kreisumfang |
| 56 | Nut |
| 62 | Seitenfläche |
| 68 | Stirnfläche |
| 74 | Auflagefläche |
| 80 | Abutment |
| 86 | Konusabschnitt |
| 92 | Indexierungsabschnitt |
| 98 | Nocken |
| 100 | Funktionsteil |
| 104 | Gingivaabschnitt |
| 106 | Stirnfläche |
| 108 | Seitenfläche |
| 110 | Kreisumfang |
| 112 | Führungsabschnitt |
| 114 | Innengewinde |
| 126 | Implantatsystem |
| 150 | Abformpfosten |
| 151 | Konus |
| 152 | Einsetzabschnitt |
| 153 | zylindrischer Übergangsbereich |
| 155 | Konus |
| 158 | Indexierungsabschnitt |
| 162 | Nocken |
| 152 | Einsetzabschnitt |
| 171 | Fixierungsschraube |
| 180 | Gingiva-Former |
| 210 | Implementationsset |
| 240 | Einbringpfosten |

| | |
|---|---|
| $\alpha$ | Konuswinkel |
| $l_k$ | Konuslänge |
| $l_i$ | Indexierungslänge |
| $l_g$ | Gesamtlänge |
| $l_s$ | Schraubengewindelänge |
| M | Mittelachse |
| $l_f$ | Seitenflächenlänge |
| a | Stirnflächenbreite |
| b | Seitenflächentiefe |
| u | Durchmesser |
| c | Nutbogenlänge |
| d | Freibogenlänge |

| | |
|---|---|
| e | Gesamtabstand der Nuten |
| f | Volumen |
| $\gamma$ | Nutwinkel |
| $\delta$ | Freiwinkel |
| r | Radius |
| $p_1$ | Berührungspunkt |
| $p_2$ | Berührungspunkt |
| $l_1$ | Linie |
| $l_2$ | Linie |
| m | Mittelpunkt |
| s | Sekante |

**Patentansprüche**

1. Dentalimplantat (2) zum Einsetzen in einen Kieferknochen, mit einer am koronalen Ende (14) des Dentalimplantats (2) angeordneten Aufnahmeöffnung (20) für ein Abutment, wobei die Aufnahmeöffnung (20) vom koronalen Ende (14) her gesehen einen Konusabschnitt (26) und einen Indexierungsabschnitt (32) aufweist, wobei der Indexierungsabschnitt (32) wenigstens eine entlang eines Kreisumfanges (50) angeordnete, sich nach außen erstreckende Nut (56) aufweist, wobei, der Konusabschnitt (26) einen Konuswinkel (a) von weniger als 3° aufweist,
**dadurch gekennzeichnet, dass**
die jeweilige Nut (56) als parallelwandiges Prisma ausgebildet ist und zwei Seitenflächen (62) aufweist, die jeweils senkrecht zu einer gemeinsamen Stirnfläche (68) stehen, welche senkrecht auf einer radial von einer Mittelachse (M) des Dentalimplantats (2) ausgehenden gedachten Linie steht, wobei genau vier Nuten (56) im regelmäßigen Abstand entlang des Kreisumfangs (50) angeordnet sind, und wobei das Verhältnis eines Freiwinkels ($\delta$), entlang dessen am Kreisumfang (50) überstrichenen Bereiches keine Nut (56) angeordnet ist, und eines Nutwinkels ($\gamma$), entlang dessen am Kreisumfang überstrichenen Bereiches eine Nut (56) angeordnet ist, zwischen 1,0 und 0,5 insbesondere zwischen 0,61 und 0,84 liegt.

2. Dentalimplantat (2) nach Anspruch 1, wobei der Konuswinkel ($\alpha$) zwischen 1° und 2°, insbesondere 1,4° beträgt.

3. Dentalimplantat (2) nach Anspruch 1 oder 2, wobei die Seitenflächen (62) eine Länge von 0,8 mm bis 1,5 mm, insbesondere 1 mm, aufweisen.

4. Dentalimplantat (2) nach einem der Ansprüche 1 bis 3, wobei am Indexierungsabschnitt (32) eine zirkuläre Auflagefläche (74) zur Unterstützung des Einfädelns für ein Abutment gebildet ist.

5. Dentalimplantat (2) nach einem der Ansprüche 1 bis 4, wobei sich vom koronalen Ende (14) her gesehen an den Indexierungsabschnitt (32) ein Innenschraubgewinde (38) anschließt.

**6.** Abutment (80) zum Einsetzen in ein Dentalimplantat (2) nach einem der Ansprüche 1 bis 5, mit einem Konusabschnitt (86) und einem Indexierungsabschnitt (92), wobei, der Konusabschnitt (86) einen Konuswinkel ($\alpha$) von weniger als 3° aufweist und wobei der Indexierungsabschnitt (92) genau vier im regelmäßigen Abstand entlang eines Kreisumfangs (110) angeordneten Nocken (98) aufweist, die mit formkongruenten Nuten (56) des Dentalimplantats (2) nach einem der Ansprüche 1 bis 5 in Eingriff bringbar sind.

**7.** Implantatsystem (126), umfassend ein Dentalimplantat (2) nach einem der Ansprüche 1 bis 5 und ein Abutment (80) nach Anspruch 6, wobei die Konusabschnitte (26, 86) derart bemessen sind, dass sie sich wenigstens teilweise berühren, insbesondere im zusammengesetzten Zustand eine selbsthemmende Verbindung eingehen.

**8.** Implantatsystem (126) nach Anspruch 7, wobei das Abutment (80) statt des Indexierungsabschnittes (92) einen zylindrischen Führungsabschnitt (112) aufweist, der in den Indexierungsabschnitt (32) des Dentalimplantats (2) einsetzbar ist.

**9.** Implantatsystem (126) nach Anspruch 7 oder 8, wobei in dem Abutment (80) ein Durchgangskanal für die Durchführung einer Fixierschraube vorgesehen ist.

**10.** Implantationsset (210) mit wenigstens einem Dentalimplantat (2) nach einem der Ansprüche 1 bis 5 und mit wenigstens einem Hilfselement aus der Gruppe: Abformpfosten (150), Gingiva-Former (180), Einbringpfosten (240).

**Claims**

**1.** A dental implant (2) to be implanted into a maxillary bone, having a reception opening (20) for an abutment arranged at a coronal extremity (14) of said dental implant (2), wherein said reception opening (20) having a cone section (26) and an indexation section (32), viewed from said coronal extremity (14), said indexation section (32) having at least one notch (56) arranged alongside a circumference (50) and extending outwards, said cone section (26) having a cone angle ($\alpha$) of less than 3°,
**characterised in that**
said respective notch (56) is formed as a parallel-faced prism and has two lateral faces (62) which are each perpendicular with respect to a common abutting face (68), which is perpendicular on an imaginary line radially extending from a central axis (M) of said dental implant (2), precisely four notches (56) being arranged in regular intervals alongside said circumference (50) and where the ratio between a clearance angle ($\delta$) alongside with no notch (56) is disposed in the area scanned at said circumference (50), and a notch angle ($\gamma$) along which a notch (56) is disposed in the area scanned at said circumference, is between 1.0 and 0,5, in particular between 0.61 and 0,84.

**2.** The dental implant (2) according to claim 1, wherein said cone angle ($\alpha$) is between 1° and 2°, in particular 1.4°.

**3.** The dental implant (2) according to claim 1 or 2, wherein said lateral faces (62) have a length between 0.8 mm and 1.5 mm, in particular 1 mm.

**4.** The dental implant (2) according to any one of claim 1 to 3, wherein a circular bearing surface (74) supporting threading for an abutment is formed on indexation section (32).

**5.** The dental implant (2) according to any one of claims 1 to 4, wherein an internal screw thread (38) prolongs said indexation section (32) viewed from said coronal extremity (14).

**6.** The abutment (80) to be implanted into a dental implant (2) according to any one of claims 1 to 5, having a cone section (86) and an indexation section (92), wherein said cone section (86) having a cone angle ($\alpha$) of less than 3° and wherein said indexation section (92) has precisely four notches (98) arranged in regular intervals alongside a circumference (110) and which can be engaged in notches (56) matching the design of said dental implant (2) according to any one of claims 1 to 5.

**7.** An implant system (126), comprising a dental implant (2) according to any one of claims 1 to 5 and an abutment (80) according to claim (6), wherein said cone sections (26, 86) are dimensioned such that they are at least partially in contact and forming a self-locking connection, in particular when assembled.

**8.** The implant system (126) according to claim 7, wherein said abutment (80) has, instead of said indexation section (92), a cylindrical guiding section (112) which is implantable in said indexation section (32) of said dental implant (2).

**9.** The implant system (126) according to any one claim 7 or 8, wherein a through channel enabling passing of a fixing screw is provided in said abutment (80).

**10.** An implantation set (210) having at least one dental implant (2) according to any one of claims 1 to 5 and having at least one auxiliary element from the group: Impression post (150), gingivia former (180), implant adapter (240).

**Revendications**

**1.** Implant dentaire (2) à implanter dans un os maxillaire et ayant une ouverture de réception (20) pour une butée, disposée à l'extrémité coronale (14) de l'implant dentaire (2), l'ouverture de réception (20), vue de l'extrémité coronale (14), présentant une section conique (26) et une section d'indexation (32), la section d'indexation (32) présentant au moins une rainure (56) disposée le long d'une circonférence (50), s'étendant vers l'extérieur, la section conique (26) présentant un angle du cône ($\alpha$) inférieur à 3°, **caractérisé en ce que** la rainure respective (56) est formée en tant que prisme aux plans parallèles et présente deux faces latérales (62), chacune perpendiculaire à une face frontale (68) commune disposée perpendiculairement sur une ligne non matérialisée s'étendant radialement à partir d'un axe central (M) de l'implant dentaire (2), un nombre exact de quatre rainures (56) étant disposé à des intervalles réguliers le long de la circonférence (50) et le rapport entre un angle libre ($\delta$) le long duquel aucune rainure (56) n'est disposée sur la zone balayée sur la circonférence (50), et un angle de rainure (y), le long duquel une rainure (56) est disposée sur la zone balayée par la circonférence, est entre 1,0 et 0,5, notamment entre 0,61 et 0,84.

**2.** Implant dentaire (2) selon la revendication 1, l'angle du cône ($\alpha$) étant entre 1° et 2°, notamment 1,4°.

**3.** Implant dentaire (2) selon la revendication 1 ou 2, les faces latérales (62) présentant une longueur de 0,8 mm à 1,5 mm, notamment d'1 mm.

**4.** Implant dentaire (2) selon l'une des revendications 1 à 3, une surface d'appui (74) circulaire permettant de faciliter l'enfilage pour une butée est formée à la section d'indexation (32).

**5.** Implant dentaire (2) selon l'une des revendications 1 à 4, un filetage intérieur (38) prolonge la section d'indexation (32), vu de l'extrémité coronale (14).

**6.** Butée (80) à implanter dans un implant dentaire (2) selon l'une des revendications 1 à 5 ayant une section conique (86) et une section d'indexation (92), la section conique (86) présentant un angle de cône (a) inférieur à 3° et la section d'indexation (92) présentant un nombre précis de quatre rainures (98) disposées à des intervalles réguliers le long d'une circonférence (110) pouvant s'engrener dans les rainures (56) épousant la forme de l'implant dentaire (2) selon l'une des revendications 1 à 5.

**7.** Système d'implants (126), comprenant un implant dentaire (2) selon l'une des revendications 1 à 5 et une butée (80) selon la revendication 6, les sections coniques (26, 86) étant dimensionnées de sorte à ce qu'elles se contactent au moins partiellement et forment notamment une connexion autobloquante en état assemblé.

**8.** Système d'implants (126) selon la revendication 7, la butée (80) présentant en lieu et place de la section d'indexation (92) une section cylindrique de guidage (112) implantable dans la section d'indexation (32) de l'implant dentaire (2).

**9.** Système d'implants (126) selon la revendication 7 ou 8, un canal de passage pour le passage d'une vis de fixation étant prévu dans la butée (80).

**10.** Jeu d'implantation (210) présentant au moins un implant dentaire (2) selon l'une des revendications 1 à 5 et au moins un élément auxiliaire du groupe : montants de moulage (150), mouleur des gencives (180), montant d'engagement (240).

Fig. 1

Fig. 2

Fig. 3

Fig. 6

Fig. 4

Fig. 5

Fig.7

Fig.8

100

80

104

126

112

38

2

10

Fig. 9

126

80

100

104

2

38

10

Fig. 10

100

126

104

10

Fig. 11

126

100

104

26

98

32

92

38

10

Fig. 12

150

Fig. 15

150

151

155

152

Fig. 13

150

Fig. 14

Fig. 18

150

Fig. 16

150

150

151

155

162

158

152

153

162

162

162

Fig. 17

210

171

Fig. 19

150

2

171

210

150

Fig. 20

180

Fig. 21

180

Fig. 22

Fig. 23

Fig. 24

210

240

2

Fig. 25

210

240

2

Fig. 26

Fig. 27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011089057 A1

- US 20090111072 A